# EUROPEAN PATENT APPLICATION

(11) **EP 4 696 548 A1**
(43) Date of publication of application: **18.02.2026**
(21) Application number: 24795514.9
(22) Date of filing: 02.02.2024
(51) Int. Cl.: B60L 53/66, B60L 53/67

(54) **CHARGING DEVICE**

(30) Priority: 27.04.2023 CN 202310478498
(71) Applicant: Huawei Digital Power Technologies Co., Ltd., Shenzhen, Guangdong 518043 (CN)
(72) Inventor: MA, Donghai, Shenzhen, Guangdong 518043 (CN); CHENG, Yuan, Shenzhen, Guangdong 518043 (CN)
(74) Representative: Gill Jennings & Every LLP
(86) International application number: PCT/CN2024/075485
(87) International publication number: WO 2024/222125

(57) **Abstract**

A charging device is provided, including a plurality of synchronization buses, a plurality of power units, a plurality of power allocation modules (210, 220, and 230; and 510 and 520), and a plurality of charging interfaces. The plurality of synchronization buses are in one-to-one correspondence with the plurality of power units. Each synchronization bus is connected to the plurality of power allocation modules (210, 220, and 230; and 510 and 520), and is configured to transmit, between at least two power allocation modules (210, 220, and 230; and 510 and 520), a state signal of a power unit corresponding to each synchronization bus, where the state signal indicates a state of communication between the power unit and the charging interface. The charging device can ensure reliability and timeliness of state signal synchronization.

## Description

This application claims priority to Chinese Patent Application No. 202310478498.1, filed with the China National Intellectual Property Administration on April 27, 2023 and entitled "CHARGING DEVICE", which is incorporated herein by reference in its entirety.

### TECHNICAL FIELD

This application relates to the energy field, and in particular, to a charging device.

### BACKGROUND

In a new energy vehicle charging station, to improve utilization of a power unit, a switching matrix is usually used in the charging station to implement dynamic multiplexing of a power allocation module, that is, power of the power unit is output to a charging interface as required by using a power switching matrix including one or more power allocation modules.

To avoid a short circuit that occurs because a single power unit outputs power to a plurality of charging interfaces at the same time, occupation of the power units by the power allocation modules needs to be synchronized in real time. Usually, a manner of adding a communication bus is used, to implement information synchronization between the power allocation modules. However, when a communication system receives interference information or a delay is large, reliability and timeliness of state signal synchronization are also affected.

Therefore, a charging device urgently needs to be designed, to ensure reliability and timeliness of state signal synchronization.

### SUMMARY

This application provides a charging device. The charging device can ensure that any power unit can communicate with only one charging interface at a same moment, to ensure reliability and timeliness of state signal synchronization of each power unit.

According to a first aspect, an embodiment of this application provides a charging device. The charging device includes a plurality of synchronization buses, a plurality of power units, a plurality of power allocation modules, and a plurality of charging interfaces. The plurality of power allocation modules are configured to control one power unit to communicate with only one charging interface at a same time, and the plurality of synchronization buses are in one-to-one correspondence with the plurality of power units. Each synchronization bus is connected to the plurality of allocation modules, and each synchronization bus is configured to transmit, between at least two allocation modules, a state signal of a power unit corresponding to each synchronization bus, where the state signal indicates a state of communication between the power unit and the charging interface.

It should be understood that the plurality of allocation modules can further control any power unit to communicate with only one charging interface at a same time.

It should be understood that a quantity of power units connected to each allocation module is not limited in this application, and a quantity of synchronization buses connected to each allocation module is not limited either, provided that the power units connected to each allocation module are in one-to-one correspondence with the synchronization buses.

According to the foregoing solution, the plurality of allocation modules in the charging device can transmit, through the synchronization bus, the state signal of the power unit corresponding to the synchronization bus, to avoid a problem that a short circuit is caused because the plurality of power allocation modules control a same power unit to supply power to a plurality of loads.

With reference to the first aspect, in some implementations of the first aspect, each power allocation module is configured to be connected to x power units in the plurality of power units, each power allocation module includes x synchronization circuits, the x synchronization circuits are in one-to-one correspondence with the x power units, x≥2, and x is an integer; an output end of each synchronization circuit is configured to be connected to a synchronization bus of a power unit corresponding to the synchronization circuit; and each synchronization circuit is configured to output, to the synchronization bus corresponding to the power unit, a state signal of the power unit corresponding to the synchronization circuit.

It should be understood that a quantity of synchronization circuits in each power allocation module is equal to and is in one-to-one correspondence with a quantity of power units connected to the power allocation module, and each synchronization circuit is configured to transmit, to the connected synchronization bus, the state signal of the corresponding power unit.

According to the foregoing solution, each power allocation module is connected to a plurality of power units, each power allocation module includes a plurality of synchronization circuits, the plurality of power units are in one-to-one correspondence with the plurality of synchronization circuits, and each synchronization circuit is configured to output, to the synchronization bus corresponding to the power unit, the state signal of the power unit corresponding to the synchronization circuit, to ensure reliability of state signal synchronization.

With reference to the first aspect, in some implementations of the first aspect, each power allocation module includes a control unit and x reading circuits, and the x reading circuits are in one-to-one correspondence with the x power units; an input end of each reading circuit is configured to be connected to a synchronization bus of a power unit corresponding to the reading circuit; an output end of each reading circuit is configured to be connected to the control unit; each reading circuit is configured to output, to the control unit, a state signal of the synchronization bus of the power unit corresponding to the reading circuit; and the control unit is configured to control, based on the state signal of the synchronization bus, the power unit corresponding to the synchronization bus to communicate with only one charging interface at a same time.

It should be understood that a synchronization circuit and a reading circuit in each power allocation module are in one-to-one correspondence.

According to the foregoing solution, each power allocation module further includes the control unit and the reading circuit. The reading circuit is connected to the synchronization bus and the control unit, and transmits, to the control unit, the state signal of the synchronization bus of the power unit corresponding to the reading circuit, so that the control unit can control, based on the state signal, the power unit corresponding to the synchronization bus to communicate with only one charging interface at a same time, to ensure reliability and real-time performance of state signal synchronization while ensuring security of the charging device.

With reference to the first aspect, in some implementations of the first aspect, an input end of each synchronization circuit is configured to be connected to an output end of the control unit; and each synchronization circuit is configured to: output, based on a control signal of the control unit, the state signal of the power unit corresponding to the synchronization circuit.

Optionally, the control signal sent by the control unit is a level signal, and communication between the power unit and the charging interface is controlled by using a high level or a low level. It should be noted that a voltage value corresponding to the high level or the low level of the control signal is not limited in this embodiment of this application. For example, the voltage value corresponding to the high level is 3.3 V, 5 V, 12 V, or 24 V, and the voltage value corresponding to the low level is 0 V.

It should be understood that before the synchronization circuit transmits the control signal to the state synchronization bus, the synchronization circuit can skip processing the control signal, or the state synchronization circuit can perform level conversion on the control signal. This is not limited in this embodiment of this application.

According to the foregoing solution, the input end of the synchronization circuit in each allocation module is connected to the control unit, and outputs, to the synchronization bus based on the control signal of the control unit, the state signal of the corresponding power unit, to implement hardware synchronization of the state signal of the power unit between the plurality of power allocation modules, and ensure reliability and real-time performance of state signal synchronization.

With reference to the first aspect, in some implementations of the first aspect, each synchronization circuit includes a first switching transistor, a control end of the first switching transistor is configured to receive the control signal of the control unit, and a first end of the first switching transistor is configured to output the state signal of the power unit corresponding to the synchronization circuit.

With reference to the first aspect, in some implementations of the first aspect, the control unit is configured to: in response to that one power unit communicates with one charging interface, control the first switching transistor to be turned on, where the first end of the first switching transistor is configured to output a first state signal, and the first state signal is a low-level signal; or in response to that one power unit does not communicate with one charging interface, control the first switching transistor to be turned off, where the first end of the first switching transistor is configured to output a second state signal, and the second state signal is a high-level signal.

With reference to the first aspect, in some implementations of the first aspect, in response to that one power unit communicates with one charging interface, a state of a synchronization bus corresponding to the power unit is a low-level signal; or in response to that one power unit does not communicate with any charging interface, a state of a synchronization bus corresponding to the power unit is a high-level signal.

According to the foregoing solution, the first switching transistor in the synchronization circuit is turned on and off in response to communication between the power unit and the charging interface, to convert the control signal into state signals of different levels and transmit the state signals to the synchronization bus, and a level of the synchronization bus also changes the state signal, to implement hardware synchronization of the state signal of the power unit between the plurality of power allocation modules, and ensure reliability and real-time performance of state signal synchronization.

With reference to the first aspect, in some implementations of the first aspect, each reading circuit includes an optocoupler, a first end of the optocoupler is configured to receive a first voltage signal, a second end of the optocoupler is configured to be connected to the synchronization bus of the power unit corresponding to the reading circuit, a third end of the optocoupler is configured to receive a second voltage signal and be connected to the control unit, and a fourth end of the optocoupler is configured to be grounded.

With reference to the first aspect, in some implementations of the first aspect, the reading circuit is configured to: in response to that the state signal of the synchronization bus corresponding to the reading circuit is a low-level signal, the reading circuit is configured to output a third state signal to the control unit, where the third state signal indicates that the power unit corresponding to the reading circuit communicates with one charging interface; or in response to that the state of the synchronization bus corresponding to the reading circuit is a high-level signal, the reading circuit is configured to output a fourth state signal to the control unit, where the fourth state signal indicates that the power unit corresponding to the reading circuit does not communicate with one charging interface.

According to the foregoing solution, the reading circuit in the power allocation module can read state signals of different levels on the synchronization bus, and output the state signal to the control unit to indicate communication between the power unit and the charging interface, to implement hardware synchronization of the state signal of the power unit between the plurality of power allocation modules, and ensure reliability and real-time performance of state signal synchronization.

According to a second aspect, a state synchronization method is provided. The method is applied to a plurality of power allocation modules, and the plurality of power allocation modules are configured to control each of a plurality of power units to communicate with only one charging interface at a same time. The method includes: obtaining a control signal, where the control signal indicates whether the power unit communicates with the charging interface; and generating and outputting, based on the control signal, a state signal to a synchronization bus that is in a plurality of synchronization buses and that corresponds to the power unit, where the state signal indicates a state of communication between the power unit and the charging interface.

It should be understood that a quantity of power units connected to each allocation module is not limited in this application, and a quantity of synchronization buses connected to each allocation module is not limited either, provided that the power units connected to each allocation module are in one-to-one correspondence with the synchronization buses.

Optionally, the control signal is a level signal, and communication between the power unit and the charging interface is controlled by using a high level or a low level. It should be noted that a voltage value corresponding to the high level or the low level of the control signal is not limited in this embodiment of this application. For example, the voltage value corresponding to the high level is 3.3 V, 5 V, 12 V, or 24 V, and the voltage value corresponding to the low level is 0 V.

According to the foregoing solution, the plurality of allocation modules in a charging device can transmit, through the synchronization bus, the state signal of the power unit corresponding to the synchronization bus, to avoid a case in which a short circuit is caused because the plurality of power allocation modules control a same power unit to supply power to a plurality of loads at the same time, and ensure reliability and timeliness of state signal synchronization.

With reference to the second aspect, in some implementations of the second aspect, the method further includes: obtaining a state signal of the synchronization bus; and controlling, based on the state signal of the synchronization bus, the power unit corresponding to the synchronization bus to communicate with only one charging interface at a same time.

According to the foregoing solution, the power allocation module can further obtain the state signal of the synchronization bus corresponding to the power unit, and control, based on the state signal, the power unit to communicate with only one charging interface at a same time, to ensure reliability and real-time performance of state signal synchronization while ensuring security of the charging device.

With reference to the second aspect, in some implementations of the second aspect, the power allocation module includes a first switching transistor, a control end of the first switching transistor is configured to receive a control signal, and a first end of the first switching transistor is configured to output a state signal; and in response to that one power unit communicates with one charging interface, the first switching transistor is controlled to be turned on, where the first end of the first switching transistor is configured to output a first state signal, and the first state signal is a low-level signal; or in response to that one power unit does not communicate with one charging interface, the first switching transistor is controlled to be turned off, where the first end of the first switching transistor is configured to output a second state signal, and the second state signal is a high-level signal.

With reference to the second aspect, in some implementations of the second aspect, in response to that one power unit communicates with one charging interface, a state of a synchronization bus corresponding to the power unit is a low-level signal; or in response to that one power unit does not communicate with one charging interface, a state of a synchronization bus corresponding to the power unit is a high-level signal.

According to the foregoing solution, the first switching transistor in the synchronization circuit is turned on and off in response to communication between the power unit and the charging interface, to convert the control signal into state signals of different levels and transmit the state signals to the synchronization bus, and a level of the synchronization bus also changes, to implement hardware synchronization of the state signal of the power unit between the plurality of power allocation modules, and ensure reliability and real-time performance of state signal synchronization.

With reference to the second aspect, in some implementations of the second aspect, the method further includes: generating a third state signal in response to that the state signal of the synchronization bus is a low-level signal, where the third state signal indicates that a power unit corresponding to the synchronization bus communicates with one charging interface; or generating a fourth state signal in response to that the state signal of the synchronization bus is a high-level signal, where the fourth state signal indicates that a power unit corresponding to the synchronization bus does not communicate with one charging interface.

According to the foregoing solution, the power allocation module can generate, based on signals of different levels on the synchronization bus, the state signal indicating communication between the power unit and the charging interface, to implement hardware synchronization of the state signal of the power unit between the plurality of power allocation modules, and ensure reliability and real-time performance of state signal synchronization.

### BRIEF DESCRIPTION OF DRAWINGS

FIG. 1 is a diagram of a charging device in the conventional technology;
FIG. 2 is a diagram of a power switching matrix in the conventional technology;
FIG. 3 is a diagram of a charging device according to an embodiment of this application;
FIG. 4 is a diagram of a power switching matrix according to an embodiment of this application;
FIG. 5 is a diagram of another charging device according to an embodiment of this application;
FIG. 6 is a diagram of a state synchronization circuit according to an embodiment of this application;
FIG. 7 is a diagram of another state synchronization circuit according to an embodiment of this application;
FIG. 8 is a diagram of still another charging device according to an embodiment of this application; and
FIG. 9 is a flowchart of a method for synchronizing a state signal of a power allocation module according to an embodiment of this application.

### DESCRIPTION OF EMBODIMENTS

The following describes technical solutions of this application with reference to accompanying drawings.

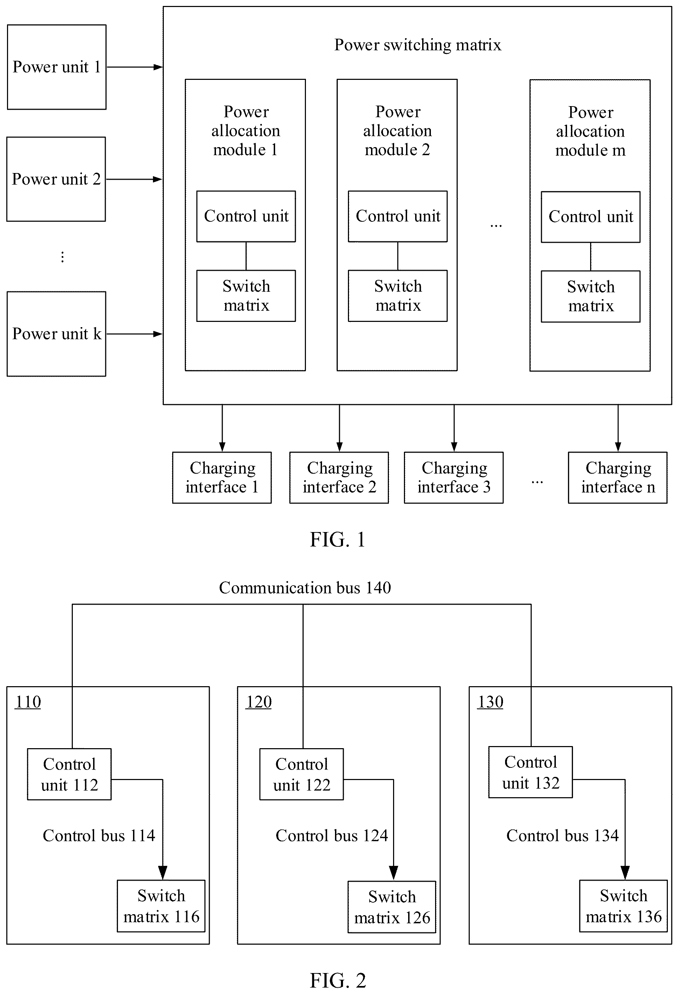

FIG. 1 is a diagram of a charging device.

In FIG. 1, k power units, n charging interfaces, and m power allocation modules are included. Each power allocation module includes a control unit and a switch matrix. The control unit of each power allocation module controls, by using a control signal, the switch matrix to output power of the power unit to the charging interface as required.

A power allocation module 1 is used as an example. A switch matrix of the power allocation module 1 may be connected to at least one power unit in power units 1 to k, and a control unit of the power allocation module 1 may control turn-on and turn-off of a plurality of switches in the switch matrix, to output, to the charging interface, power of the at least one power unit connected to the switch matrix. A function of another power allocation module is the same as that of the power allocation module 1, and details are not described herein again.

It should be understood that each power allocation module can allocate power of some or all power units to a to-be-charged device, and a connection manner between the power units and the charging interface is not limited in embodiments of this application.

However, because the charging device includes a plurality of power allocation modules that work independently, when the plurality of power allocation modules control a same power unit to output power to two different charging interfaces, if charging voltages of the two charging interfaces are different, a potential difference is generated between the two charging interfaces. Consequently, a terminal interface is short-circuited in a charging state. For example, if the power allocation module 1 outputs power of the power unit 1 to a charging interface 1, a power allocation module 2 outputs the power of the power unit 1 to a charging interface 2, a charging voltage corresponding to the charging interface 1 is 800 V, and a charging voltage corresponding to the charging interface 2 is 400 V, a short circuit occurs between the charging interface 1 and the charging interface 2. It should be understood that when a same power unit supplies power to two charging interfaces with a same charging voltage but different battery specifications, a potential difference is also generated, and consequently a short-circuit phenomenon is caused. Therefore, occupation of the power unit by the power allocation modules needs to be synchronized in real time, so that one power unit communicates with only one charging interface at a same time, to resolve the foregoing short-circuit problem.

FIG. 2 is a block diagram of a power switching matrix in the conventional technology.

As shown in FIG. 2, the power switching matrix 100 includes power allocation modules 110, 120, and 130, and a communication bus 140. Each power allocation module includes a control unit, a control bus, and a switch matrix. An input end of each switch matrix is connected to one or more power units (not shown in the figure), and an output end is connected to one or more charging interfaces (not shown in the figure). The power allocation module 110 is used as an example. A control unit 112 is connected to a switch matrix 116 through a control bus 114, and sends a control signal through the control bus 114 to control switching of the switch matrix 116, to control power switching of the power unit. The control unit 112 is further connected to the communication bus 140, and sends a communication signal through the communication bus 140, to synchronize an occupation state of the power unit with the power allocation modules 120 and 130.

On one hand, a manner of synchronizing the occupation state of the power unit through the communication bus greatly depends on reliability of communication. Provided that communication is interfered, an error may occur during transmission of synchronization information. On the other hand, because the control bus and the communication bus are independent of each other, after sending the control signal, the control unit 112 needs to convert the control signal into the communication signal by using specific software, and then transmit the communication signal through a connection port of the communication bus. That is, in the method for performing state synchronization, the software needs to participate in state synchronization processing. In addition, it is easy to understand that when a delay of a communication system is large, real-time performance of state signal synchronization cannot be ensured.

In view of this, embodiments of this application provide a method for synchronizing a state signal between a charging device and a power allocation module, to avoid impact of interference information on transmission reliability and reduce a delay, to ensure real-time performance of state signal synchronization.

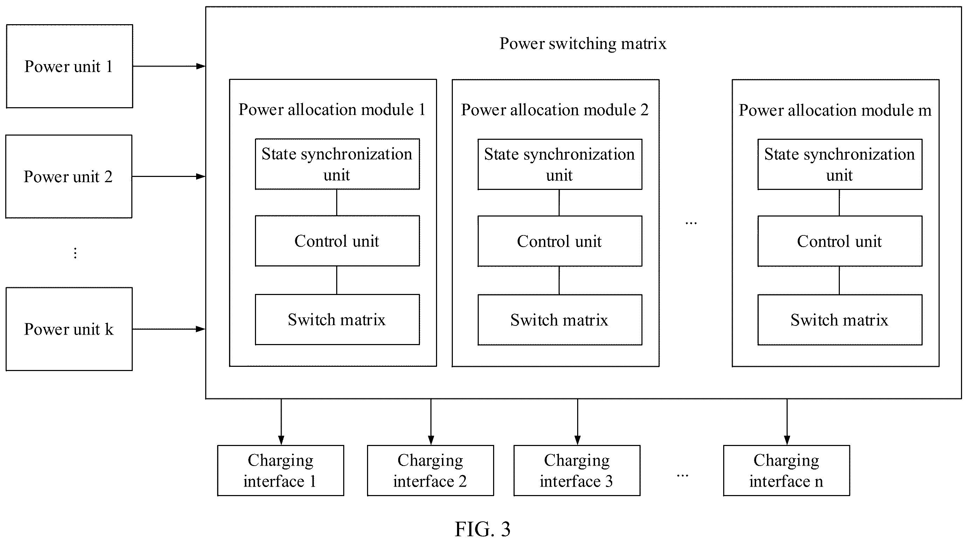

FIG. 3 is a diagram of a charging device according to an embodiment of this application.

In FIG. 3, k power units, n charging interfaces, and a power switching matrix including m power allocation modules are included. Each power allocation module includes a state synchronization unit, a control unit, and a switch matrix. The control unit of each power allocation module is configured to control turn-on and turn-off of a plurality of switches in the switch matrix, to output, to the charging interface, power of at least one power unit connected to the switch matrix. A difference from the charging device in FIG. 1 is that each control unit further transmits a control signal to the state synchronization unit, to synchronize an occupation state of the power unit, to avoid a short-circuit fault.

It should be understood that the occupation state of the power unit can be understood as a state of communication s between the power unit and the charging interface. For example, that the power unit is occupied means that the power unit communicates with the charging interface, and that the power unit is not occupied means that the power unit does not communicate with the charging interface.

It should be understood that the state synchronization unit, the control unit, and the switch matrix in the power allocation module can be integrated on a same entity (for example, a board), or can be separately used as different entities to implement corresponding functions. This is not limited in this embodiment of this application.

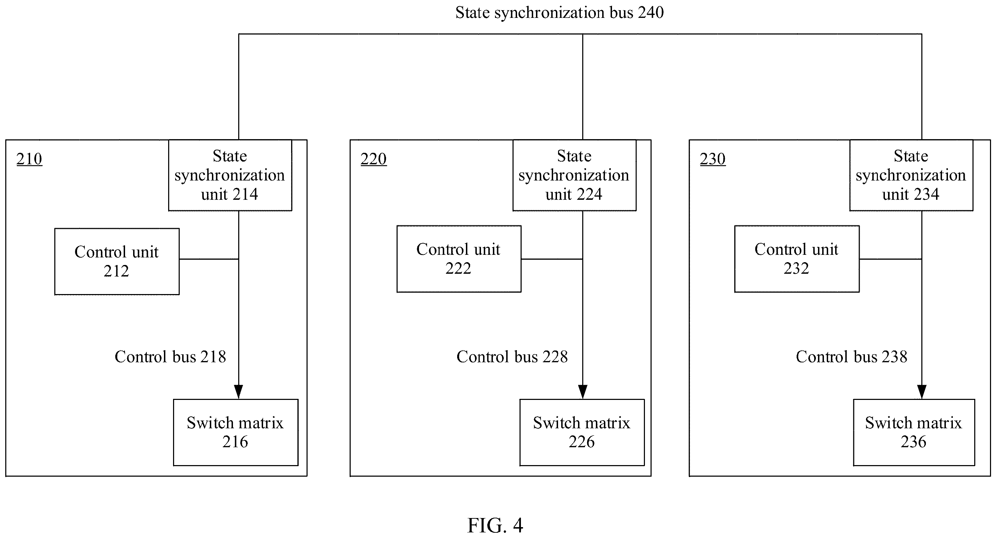

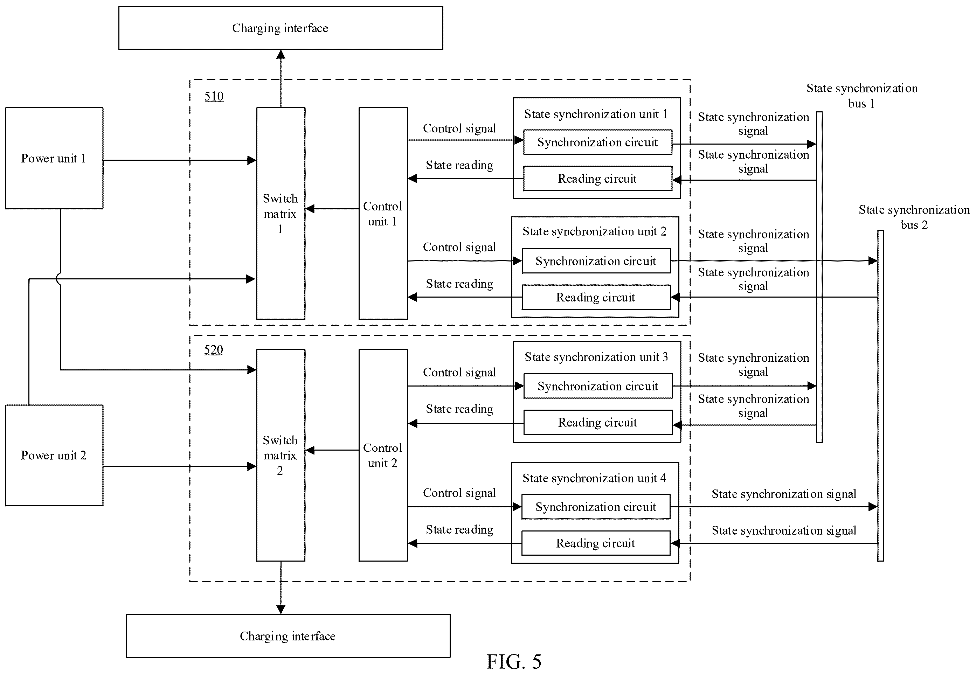

The following describes in detail a power switching matrix provided in an embodiment of this application with reference to FIG. 4 and FIG. 5. For ease of describing a charging principle of a charging device provided in this embodiment of this application, the following uses a charging device including two power allocation modules and two power units as an example for description.

FIG. 4 is a diagram of a power switching matrix according to an embodiment of this application.

The power switching matrix includes power allocation modules 210, 220, and 230, and a state synchronization bus 240. Each power allocation module includes a control unit, a state synchronization unit, and a switch matrix. An input end of each switch matrix is connected to one or more power units (not shown in the figure), and an output end is connected to one or more charging interfaces (not shown in the figure).

The power allocation module 210 is used as an example. The power allocation module 210 includes a control unit 212, a state synchronization unit 214, and a switch matrix 216. The control unit 212 is configured to control turn-on and turn-off of a plurality of switches in the switch matrix 216, to output, to the charging interface, power of at least one power unit connected to the switch matrix 212. In addition, the control unit 212 further transmits a control signal to the state synchronization unit 214. After converting the control signal into a synchronization signal, the state synchronization unit 214 uploads the synchronization signal to the state synchronization bus, to synchronize an occupation state of the power unit with the power allocation modules 220 and 230.

It should be understood that a quantity of power units connected to each power allocation module is not limited in this embodiment of this application. A quantity of state synchronization units in each power allocation module is equal to and is in one-to-one correspondence with a quantity of power units connected to the power allocation module. Further, each state synchronization unit is configured to synchronize the occupation state of the corresponding power unit.

By way of an example but not a limitation, if a power allocation module 1 is configured to allocate power of x charging power modules in k power units, the power allocation module 1 includes x state synchronization units, the x state synchronization units are in one-to-one correspondence with the x charging power modules, and each state synchronization unit is configured to synchronize an occupation state of a charging power module corresponding to the state synchronization unit; or if a power allocation module 2 is configured to allocate power of all k power units, the power allocation module 2 includes k state synchronization units, and the k state synchronization units are in one-to-one correspondence with k charging power modules.

It should be understood that, state synchronization units corresponding to a same power unit are connected to a same state synchronization bus. In other words, the state synchronization units connected to the same state synchronization bus are configured to synchronize an occupation state of the same power unit. By way of an example but not a limitation, both the power allocation module 1 and the power allocation module 2 can allocate power of the power unit, a state synchronization unit 1 in the power allocation module 1 corresponds to a charging allocation unit 1, and a state synchronization unit 2 in the power allocation module 2 corresponds to the charging allocation unit 1. In this case, the state synchronization unit 1 and the state synchronization unit 2 are connected to a same state synchronization bus, and are configured to synchronize an occupation state of the charging allocation unit 1. That is, if there are k power units, there are k state synchronization buses in total, the k power units are in one-to-one correspondence with the k state synchronization buses, and each state synchronization bus is configured to synchronize a state of one of the power units.

For ease of describing a charging principle of a charging device provided in this embodiment of this application, the following uses a charging device including two power allocation modules and two power units as an example for description with reference to FIG. 5.

FIG. 5 is a diagram of another charging device according to an embodiment of this application.

As shown in FIG. 5, both a power allocation module 510 and a power allocation module 520 can output power of a power unit 1 and power of a power unit 2 to a charging interface by using a switch matrix. In FIG. 5, both a state synchronization unit 1 and a state synchronization unit 3 are connected to a state synchronization bus 1 and are configured to synchronize an occupation state of the power unit 1; and both a state synchronization unit 2 and a state synchronization unit 4 are connected to a state synchronization bus 2 and are configured to synchronize an occupation state of the power unit 2.

It should be understood that a state synchronization unit in each power allocation module includes a synchronization circuit and a reading circuit, and both the synchronization circuit and the reading circuit in each power allocation module are in one-to-one correspondence with the power unit connected to the power allocation module. For example, a synchronization circuit and a reading circuit in the state synchronization unit 1 correspond to the power unit 1, and a synchronization circuit and a reading circuit in the state synchronization unit 2 correspond to the power unit 2.

It should be understood that an input end of each synchronization circuit is connected to a control unit, an output end is connected to a state synchronization bus of a power unit corresponding to the synchronization circuit, and each synchronization circuit is configured to output, based on a control signal of the connected control unit, a state synchronization signal of the power unit corresponding to the synchronization circuit. For example, an input end of the synchronization circuit in the state synchronization unit 1 is connected to a control unit 1, an output end is connected to the state synchronization bus 1 corresponding to the power unit 1, and the synchronization circuit outputs a state synchronization signal of the power unit 1 to the state synchronization unit 1 based on a control signal of the control unit 1.

It should be understood that an input end of each reading circuit is connected to a state synchronization bus of a corresponding power unit, an output end is connected to a control unit in a power allocation module to which the reading circuit belongs, and each reading circuit transmits a state signal of the connected state synchronization bus to the control unit. For example, an input end of the reading circuit in the state synchronization unit 2 is connected to the state synchronization bus 2 corresponding to the power unit 2, an output end is connected to the control unit 1, and the reading circuit outputs a state synchronization signal of the power unit 2 on the state synchronization bus 2 to the control unit 1.

In a possible implementation, the power allocation module 510 needs to allocate output power of the power unit 1 to a charging interface 1 connected to the power allocation module 510. The control unit 1 not only sends a control signal to the switch matrix, to control a charging loop between the power unit 1 and the charging interface 1 to be connected, but also sends the control signal to the state synchronization unit 1. The synchronization circuit in the state synchronization unit 1 outputs, based on the control signal, a state synchronization signal indicating that the power unit 1 is occupied, and transmits the state synchronization signal to the state synchronization bus 1. In addition, in this implementation, a reading circuit in the state synchronization unit 3 can read, from the state synchronization bus 1, the state synchronization signal indicating that the power unit 1 is occupied, and transmit the state synchronization signal to a control unit 2, so that the control unit 2 determines that the power unit 1 is occupied. Further, the control unit 2 does not control a charging loop between the power unit 1 and a charging interface 2 to be connected.

In a possible implementation, the control signal sent by the control unit is a level signal, and switching of the switch matrix is controlled by using a high level or a low level. It should be noted that a voltage value corresponding to the high level or the low level of the control signal is not limited in this embodiment of this application. For example, the voltage value corresponding to the high level is 3.3 V, 5 V, 12 V, or 24 V, and the voltage value corresponding to the low level is 0 V.

It should be understood that before the state synchronization unit transmits the control signal to the state synchronization bus, the state synchronization unit can skip processing the control signal, or the state synchronization unit can perform level conversion on the control signal. This is not limited in this embodiment of this application.

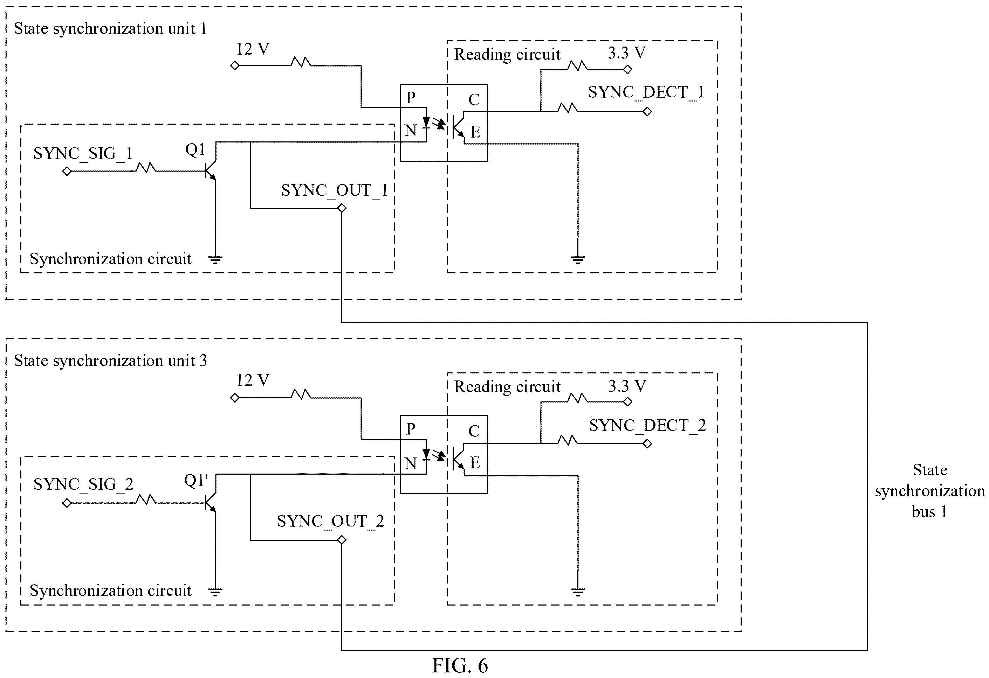

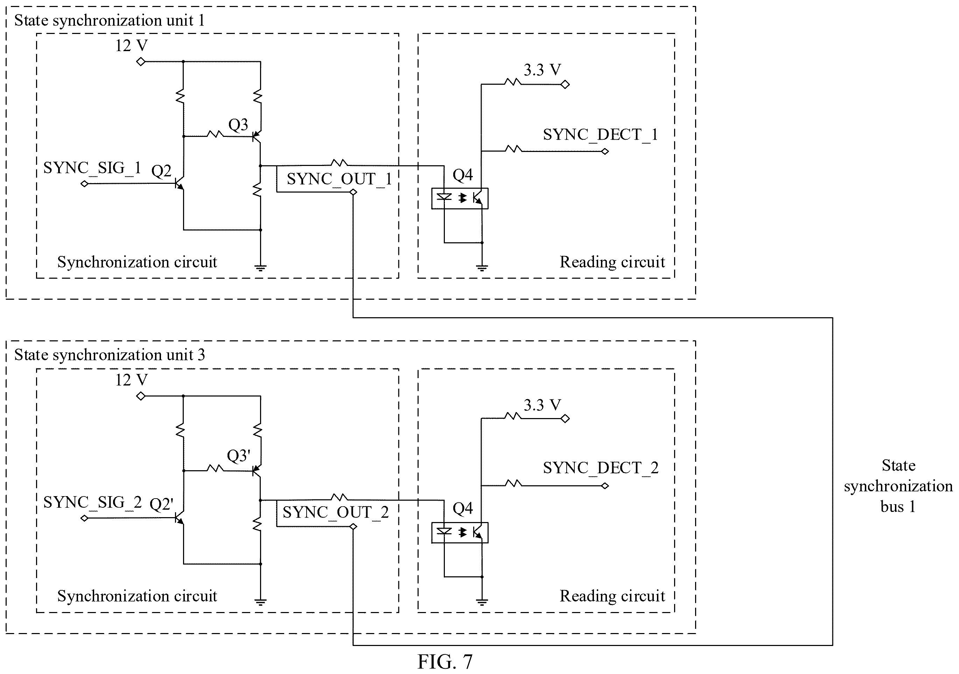

To further describe a principle of implementing state synchronization between the power allocation module 1 and the power allocation module 2 shown in FIG. 5, the following provides descriptions with reference to FIG. 6 and FIG. 7.

FIG. 6 is a diagram of a state synchronization unit according to an embodiment of this application.

A state synchronization unit 1 and a state synchronization unit 3 are configured to synchronize an occupation state of the power unit 1 in FIG. 5. As shown in FIG. 6, each state synchronization unit includes a state synchronization circuit and a state reading circuit. The state synchronization unit 1 is used as an example. One input end "SYNC_SIG_1" of the synchronization circuit is connected to the control unit 1 in FIG. 5, and is configured to receive a control signal, the other end of "SYNC_SIG_1" is connected to a base (namely, a control end) of a triode Q1 (an example of a first switching transistor), and a collector (namely, a first end) of the triode Q1 is connected to two output ends of the synchronization circuit. One output end of the synchronization circuit is connected to an input end of the state reading circuit through an optical coupler (optical coupler, OC) (namely, an optocoupler), and the other output end "SYNC_OUT_1" is connected to a state synchronization bus 1. In addition, the state synchronization bus 1 is further connected to "SYNC_OUT_2" in the state synchronization unit 3.

Correspondingly, one input end of the reading circuit is connected to one output end of the synchronization circuit, and the output end "SYNC_DECT_1" is connected to the control unit 1 in FIG. 5, and is configured to transmit a state synchronization signal to the control unit 1.

In addition, as shown in FIG. 6, because a P port (namely, a first end) of the optical coupler receives a 12 V voltage (namely, a first voltage signal), an N port (namely, a second end) is connected to the state synchronization bus 1 through "SYNC_OUT_1"; and because a C port (namely, a third end) receives a 3.3 V voltage (namely, a second voltage signal) and is connected to the control unit 1 in FIG. 5 through "SYNC_DECT_1", an E port (namely, a fourth end) is grounded.

It should be understood that the state synchronization bus 1 shown in FIG. 6 complies with line and logic, to be specific, when a level of any port in "SYNC_OUT_1" and "SYNC_OUT_2" connected to the state synchronization bus changes from high to low, a level of the other port is also pulled down.

According to the foregoing connection manner, the reading circuit of the state synchronization unit can read the state synchronization signal (namely, a high level or a low level) from the state synchronization bus through "SYNC_OUT", and transmit the state synchronization signal to the "SYNC_DECT" port, to synchronize an occupation state of the power unit 1 to the control unit to which the power unit 1 belongs.

In the foregoing implementation, when the control unit 1 determines that the power unit 1 is occupied, the control signal received by the synchronization circuit in the state synchronization unit 1 through "SYNC_SIG_1" is a high level, and indicates that the power unit 1 is occupied. In this case, the triode Q1 is turned on, and the output end "SYNC_OUT_1" of the synchronization circuit is grounded, that is, the state synchronization signal output by the switching transistor Q1 is a low-level signal (namely, a first state signal), so that a level of the state synchronization bus 1 is pulled down.

Further, because the state synchronization bus 1 is a low level, regardless of whether a triode Q1' in the state synchronization unit 3 is turned on, a level of "SYNC_OUT_2" of the state synchronization unit 3 is pulled down. In this case, the optical coupler of the state synchronization unit 3 is turned on, so that the "SYNC_DECT_2" port of the state synchronization unit 3 is also a low level, and the low-level signal indicates that the power unit 1 is occupied. In addition, because a control unit 2 is connected to an output end of the state synchronization unit 3, that is, the control unit 2 is connected to the "SYNC_DECT_2" port, the control unit 2 can determine, based on the low-level signal (namely, a third state signal) output by the "SYNC _DECT_2" port, that the power unit 1 is occupied, and the control unit 2 does not allocate power of the power unit 1 to a charging interface 2.

It should be understood that a correspondence between a level at "SYNC_DECT" and the occupation state of the power unit is not limited in this application. By way of an example but not a limitation, when a signal read by the control unit through "SYNC_DECT" is "0", it indicates that the power unit 1 is occupied; or when a signal read by the control unit through "SYNC_DECT" is "1", it indicates that the power unit 1 is not occupied.

In another possible implementation, the control unit 2 determines that the power unit 1 is not occupied, and the triode Q1' is turned off. In this case, the output end "SYNC_OUT_2" of the synchronization circuit is connected to 12 V, that is, the state synchronization signal output by "SYNC_OUT_2" is a high-level signal (namely, a second state signal). In this case, if the control unit 1 does not occupy the power unit 1 either, "SYNC_DECT_2" of the state synchronization unit 3 is connected to 3.3 V, and the state synchronization signal transmitted to the control unit 2 is also a high-level signal (namely, a fourth state signal), and indicates that the power unit 1 is not occupied.

FIG. 7 is a diagram of another state synchronization unit according to an embodiment of this application.

Similarly, a state synchronization unit 1 and a state synchronization unit 3 are configured to synchronize an occupation state of the power unit 1 in FIG. 5. As shown in FIG. 7, each state synchronization unit includes a synchronization circuit and a reading circuit. The state synchronization unit 1 is used as an example. One input end "SYNC_SIG_1" of the synchronization circuit is connected to the control unit 1 in FIG. 5, and is configured to receive a control signal, and the other end of "SYNC_SIG_1" is connected to two output ends of the synchronization circuit through triodes Q2 and Q3. One output end of the synchronization circuit is connected to an input end of the reading circuit through an optical coupler, and the other output end "SYNC_OUT_1" is connected to a state synchronization bus 1. In addition, the state synchronization bus 1 is further connected to "SYNC_OUT_2" in the state synchronization unit 3.

Correspondingly, one input end of the reading circuit is connected to one output end of the synchronization circuit, and the output end "SYNC_DECT_1" is connected to the control unit 1 in FIG. 5, and is configured to transmit a state synchronization signal to the control unit 1.

It should be understood that for specific descriptions of a connection manner of the optical coupler, refer to related content in FIG. 6. Details are not described herein again.

It should be understood that the state synchronization bus corresponding to the state synchronization unit shown in FIG. 7 complies with line or logic, to be specific, when a level of any port in "SYNC_OUT_1" and "SYNC_OUT_2" connected to the state synchronization bus changes from low to high, a level of the other port is also pulled up.

According to the foregoing connection manner, the reading circuit of the state synchronization unit can read the state synchronization signal (namely, a high level or a low level) from the state synchronization bus through "SYNC_OUT", and transmit the state synchronization signal to the "SYNC_DECT" port, to synchronize the occupation state of the power unit 1 to the control unit to which the power unit 1 belongs.

It should be noted that, Q2 and Q3 in FIG. 7 are two different types of triodes. For example, the triode Q2 is an "NPN" transistor, and the triode Q3 is a "PNP" transistor.

In the foregoing implementation, when the control unit 1 determines that the power unit 1 is occupied, the control signal received by the synchronization circuit in the state synchronization unit 1 through "SYNC_SIG_1" is a high level, and indicates that the power unit 1 is occupied. In this case, the triodes Q2 and Q3 are turned on, and a level of the output end "SYNC_OUT" of the synchronization circuit becomes high, so that a level of the state synchronization bus 1 through "SYNC_OUT" is pulled up.

Further, because the state synchronization bus 1 is a high level, regardless of whether triodes Q2' and Q3' in the state synchronization unit 3 are turned on, a level of "SYNC_OUT_2" of the state synchronization unit 3 is pulled up. In this case, the optical coupler is turned on, so that the "SYNC_DECT_2" port of the state synchronization unit 3 is also a high level, to indicate, to a control unit 2, that the power unit 1 is occupied, and the control unit 2 is not allowed to control a switch matrix 2 to allocate output power of the power unit 1.

It should be understood that, the state synchronization unit 1 can also read, through the "SYNC_DECT" port of the reading module of the state synchronization unit 1, that a level at "SYNC_OUT" becomes low.

It should be understood that a correspondence between a level at "SYNC_DECT" and the occupation state of the power unit is not limited in this application. By way of an example but not a limitation, when a signal read by the control unit through "SYNC_DECT" is "0", it indicates that the power unit 1 is occupied; or when a signal read by the control unit through "SYNC_DECT" is "1", it indicates that the power unit 1 is not occupied.

In another possible implementation, the control unit 2 determines that the power unit 1 is occupied, and the triodes Q2' and Q3' are turned off. In this case, the output end "SYNC_OUT_2" of the synchronization circuit is grounded, that is, the state synchronization signal output by "SYNC_OUT_2" is a low-level signal. In this case, if the control unit 1 does not occupy the power unit 1 either, "SYNC_DECT_2" of the state synchronization unit 3 is connected to 3.3 V, and the state synchronization signal transmitted to the control unit 2 is a high-level signal, and indicates that the power unit 1 is not occupied.

It should be understood that, in addition to the triode, shown in the figure, disposed to control turn-on/off, the state synchronization unit shown in FIG. 6 and FIG. 7 can be connected and controlled to be turned on and turned off in another manner. For example, a switch component with a through-current capability such as a MOS transistor is disposed, or a relay is disposed. This is not limited in this embodiment of this application.

It should be understood that, in addition to the optical coupler, shown in the figure, disposed between the synchronization circuit and the reading circuit of the state synchronization unit shown in FIG. 6 and FIG. 7, a switch component such as a relay can be further disposed to control turn-on/off. This is not limited in this embodiment of this application.

It should be noted that the charging device provided in embodiments of this application does not limit a quantity of power units and a quantity of power allocation modules. For a manner of synchronizing the occupation state of the power unit between the power allocation modules, refer to the foregoing principles.

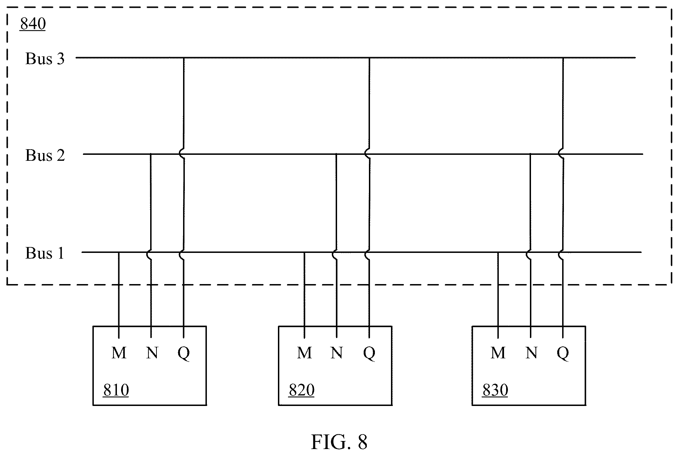

FIG. 8 is a diagram of a partial connection of a charging device according to an embodiment of this application.

As shown in FIG. 8, power allocation modules 810, 820, and 830 include state synchronization units corresponding to power units M, N, and Q (not shown in the figure). A bus 1 is configured to synchronize an occupation state of the power unit M, a bus 2 is configured to synchronize an occupation state of the power unit N, and a bus 3 is configured to synchronize an occupation state of the power unit Q.

Specifically, a state synchronization unit configured to synchronize the power unit M in each power allocation module is connected to the bus 1, a state synchronization unit configured to synchronize the power unit N in each power allocation module is connected to the bus 2, and a state synchronization unit configured to synchronize the power unit Q in each power allocation module is connected to the bus 3. For a specific synchronization manner, refer to the foregoing implementation. Details are not described herein again.

An embodiment of this application further provides a method for synchronizing a state signal of a power allocation module. The method can be applied to a charging device including a plurality of power allocation modules, one or more power units, and a plurality of charging interfaces.

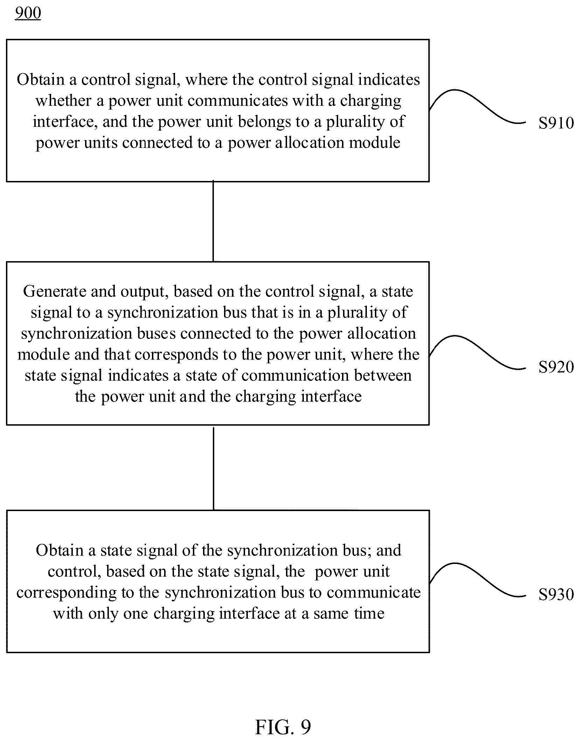

FIG. 9 is a diagram of a method 900 for synchronizing a state signal of a power allocation module according to an embodiment of this application.

S910: Obtain a control signal, where the control signal indicates whether a power unit communicates with a charging interface, and the power unit belongs to a plurality of power units connected to the power allocation module.

It should be understood that the obtained control signal can be a control signal received from a control module in the charging device, or can be a control signal generated by a control unit in the power allocation module. This is not limited in this embodiment of this application.

S920: Generate and output, based on the control signal, a state signal to a synchronization bus that is in a plurality of synchronization buses connected to the power allocation module and that corresponds to the power unit, where the state signal indicates a state of communication between the power unit and the charging interface.

It should be understood that a quantity of power units connected to each power allocation module is not limited in this embodiment of this application. A quantity of state synchronization units in each power allocation module is equal to and is in one-to-one correspondence with a quantity of power units connected to the power allocation module. Further, each state synchronization unit is configured to synchronize the occupation state of the corresponding power unit.

It should be understood that, state synchronization units corresponding to a same power unit are connected to a same state synchronization bus. In other words, the state synchronization units connected to the same state synchronization bus are configured to synchronize the occupation state of the same power unit.

Optionally, the method 900 further includes the following step: S930: Obtain a state signal of the synchronization bus; and control, based on the state signal, the power unit corresponding to the synchronization bus to communicate with only one charging interface at a same time.

For a specific principle of the method 900, refer to related descriptions in FIG. 4 to FIG. 8. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, wherein the charging device comprises a plurality of synchronization buses, a plurality of power units, a plurality of power allocation modules, and a plurality of charging interfaces, the plurality of power allocation modules are configured to control one power unit to communicate with only one charging interface at a same time, and the plurality of synchronization buses are in one-to-one correspondence with the plurality of power units;
each synchronization bus is connected to the plurality of power allocation modules, and each synchronization bus is configured to transmit, between the at least two power allocation modules, a state signal of a power unit corresponding to each synchronization bus; and
the state signal indicates a state of communication between the power unit and the charging interface.

2. The charging device according to claim 1, wherein each power allocation module is configured to be connected to x power units in the plurality of power units, each power allocation module comprises x synchronization circuits, the x synchronization circuits are in one-to-one correspondence with the x power units, x≥2, and x is an integer;
an output end of each synchronization circuit is configured to be connected to a synchronization bus of a power unit corresponding to the synchronization circuit; and
each synchronization circuit is configured to output, to the synchronization bus corresponding to the power unit, a state signal of the power unit corresponding to the synchronization circuit.

3. The charging device according to claim 2, wherein each power allocation module comprises a control unit and x reading circuits, and the x reading circuits are in one-to-one correspondence with the x power units;
an input end of each reading circuit is configured to be connected to a synchronization bus of a power unit corresponding to the reading circuit;
an output end of each reading circuit is configured to be connected to the control unit;
each reading circuit is configured to output, to the control unit, a state signal of the synchronization bus of the power unit corresponding to the reading circuit; and
the control unit is configured to:
control, based on the state signal of the synchronization bus, the power unit corresponding to the synchronization bus to communicate with only one charging interface at a same time.

4. The charging device according to claim 3, wherein an input end of each synchronization circuit is configured to be connected to an output end of the control unit; and
each synchronization circuit is configured to:
output, based on a control signal of the control unit, the state signal of the power unit corresponding to the synchronization circuit.

5. The charging device according to claim 4, wherein each synchronization circuit comprises a first switching transistor, a control end of the first switching transistor is configured to receive the control signal of the control unit, and a first end of the first switching transistor is configured to output the state signal of the power unit corresponding to the synchronization circuit.

6. The charging device according to claim 5, wherein the control unit is configured to:
in response to that one power unit communicates with one charging interface, control the first switching transistor to be turned on, wherein the first end of the first switching transistor is configured to output a first state signal, and the first state signal is a low-level signal; or
in response to that one power unit does not communicate with one charging interface, control the first switching transistor to be turned off, wherein the first end of the first switching transistor is configured to output a second state signal, and the second state signal is a high-level signal.

7. The charging device according to claim 6, wherein in response to that one power unit communicates with one charging interface, a state of a synchronization bus corresponding to the power unit is a low-level signal; or
in response to that one power unit does not communicate with one charging interface, a state of a synchronization bus corresponding to the power unit is a high-level signal.

8. The charging device according to claim 6 or 7, wherein each reading circuit comprises an optocoupler, a first end of the optocoupler is configured to receive a first voltage signal, a second end of the optocoupler is configured to be connected to the synchronization bus of the power unit corresponding to the reading circuit, a third end of the optocoupler is configured to receive a second voltage signal and be connected to the control unit, and a fourth end of the optocoupler is configured to be grounded.

9. The charging device according to claim 8, wherein the reading circuit is configured to:
in response to that the state signal of the synchronization bus corresponding to the reading circuit is a low-level signal, the reading circuit is configured to output a third state signal to the control unit, wherein the third state signal indicates that the power unit corresponding to the reading circuit communicates with one charging interface; or
in response to that the state of the synchronization bus corresponding to the reading circuit is a high-level signal, the reading circuit is configured to output a fourth state signal to the control unit, wherein the fourth state signal indicates that the power unit corresponding to the reading circuit does not communicate with one charging interface.
